# EUROPEAN PATENT SPECIFICATION

(11) **EP 2 871 874 B1**
(45) Date of publication and mention of the grant of the patent: **21.03.2018**
(21) Application number: 12880875.5
(22) Date of filing: 09.07.2012
(51) Int. Cl.: H04W 8/04, H04W 60/00

(54) **LOCATION UPDATE METHOD, DEVICE AND SYSTEM**
ORTSAKTUALISIERUNGSVERFAHREN, VORRICHTUNG UND SYSTEM
PROCÉDÉ, DISPOSITIF ET SYSTÈME DE MISE À JOUR DE ZONE DE LOCALISATION

(43) Date of publication of application: 13.05.2015
(73) Proprietor: Huawei Technologies Co., Ltd., Longgang District Shenzhen, Guangdong 518129 (CN)
(72) Inventor: WU, Xiaobo, Shenzhen Guangdong 518129 (CN); ZHANG, Yanping, Shenzhen Guangdong 518129 (CN); ZHU, Fenqin, Shenzhen Guangdong 518129 (CN); SHI, Shufeng, Shenzhen Guangdong 518129 (CN)
(74) Representative: Gill Jennings & Every LLP
(86) International application number: PCT/CN2012/078384
(87) International publication number: WO 2014/008625

(56) References cited:
- CN-A- 1 697 409
- CN-A- 1 697 546
- CN-A- 101 394 348
- CN-A- 101 453 727
- CN-A- 102 238 723
- US-A1- 2005 064 889
- US-B1- 6 505 044
- MOTOROLA: "Addition of the Optimised RA/LA Update Procedure", 3GPP DRAFT; S2-010124, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Los Angeles, USA; 20010130, 30 January 2001 (2001-01-30), XP050234150, [retrieved on 2001-01-30]
- "Universal Mobile Telecommunications System (UMTS); Network sharing; Architecture and functional description (3GPP TS 23.251 version 6.3.0 Release 6); ETSI TS 123 251", IEEE, LIS, SOPHIA ANTIPOLIS CEDEX, FRANCE, vol. 3-SA2, no. V6.3.0, 1 March 2005 (2005-03-01), XP014027542, ISSN: 0000-0001
- HUAWEI ET AL: "Discussion about the SGs/Gs association removal problem", 3GPP DRAFT; S2-110425_DISCUSSION ABOUT SGS-GS ASSOCIATION REMOVAL PROBLEM_V2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Salt Lake City; 20110221, 15 February 2011 (2011-02-15), XP050523659, [retrieved on 2011-02-15]
- VODAFONE: "GWCN UTRAN and charging", 3GPP DRAFT; S2-121583_23251 R11_GWCN CHARGING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Bratislava, Slovakia; 20120416 - 20120420, 11 April 2012 (2012-04-11), XP050632074, [retrieved on 2012-04-11]
- ALCATEL-LUCENT: "Full support of Mult-Operator Core Network by GERAN", 3GPP DRAFT; C1-114312_(WAS_C1-113820)_24.008_R11_FULL- MOCN-GERAN, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG1, no. Hyderabad; 20111010, 17 October 2011 (2011-10-17), XP050534714, [retrieved on 2011-10-17]

## Description

### TECHNICAL FIELD

The present invention relates to the field of communications technologies, and in particular, to a location update method, apparatus, and system.

### BACKGROUND

User terminal (User Equipment, UE for short) services are classified into circuit switched (Circuit Switched, CS for short) services and packet switched (Packet Switched, PS for short) services, where the CS services include a voice service and an SMS message service, and the PS services include an Internet access service. When performing roaming (for example, international roaming), a UE often needs to perform a handover between networks covered by different operators. A public land mobile network identity (Public Land Mobile Network Identity, PLMN ID for short) uniquely identifies an operator. Different operators have different PLMN IDs, for example, a PLMN ID of China Mobile Communications Corporation is 46000 and a PLMN ID of China United Telecommunications Co. Ltd. is 46001.

In a UE location update process, a PLMN ID (namely, an operator) needs to be selected for a CS service and a PS service separately. For a UE that supports operator selection, the PLMN ID may be selected by the UE. For a UE that does not support operator selection, a network element device selects a PLMN ID for the UE.

In a process of implementing the foregoing location update, the inventor finds that the prior art has at least the following problem: Different operators are selected for a CS service and a PS service of a same UE, which causes disordered service charging and harms user benefits.

US 2005/0064889 A1 describes an approach for selecting a gateway node using information about partner networks.

3GPP TS 23.251 v 6.3.0 r 6 describes an approach for network sharing beterm core network operators.

US 6505044 B1 describes an approach for arranging mobility management procedures in a core network.

### SUMMARY

Embodiments and comparative examples of the present invention provide a location update method, apparatus, and system, which can avoid selecting different operators for a CS service and a PS service of a UE, thereby preventing a problem of disordered charging caused therefrom.

Aspects of the invention are set out in the claims.

According to the location update method, apparatus, and system provided by the embodiments and comparative examples of the present invention, it can be determined whether an operator identity of a first domain is the same as an operator identity of a second domain when location update is requested in the first domain. When a determining result indicates that the operator identity of the first domain is different from the operator identity of the second domain, an Update Location request of the first domain is rejected or a location update cancel request is sent to the second domain; or when a determining result indicates that the operator identity of the first domain is the same as the operator identity of the second domain, an Update Location request of the first domain is received. This avoids selecting different operators for a CS service and a PS service of a UE, thereby preventing a problem of disordered charging caused therefrom.

### BRIEF DESCRIPTION OF DRAWINGS

To describe the technical solutions in the embodiments and comparative examples of the present invention or in the prior art more clearly, the following briefly introduces the accompanying drawings required for describing the embodiments, the comparative examples or the prior art. Apparently, the accompanying drawings in the following description show merely some embodiments and comparative examples of the present invention, and a person of ordinary skill in the art may still derive other drawings from these accompanying drawings without creative efforts.
FIG. 1 is a schematic diagram of an architecture of a GWCN network;
FIG. 2 is a schematic diagram of an architecture of an MOCN network;
FIG. 3 is a flowchart of a location update method;
FIG. 4 is a flowchart of another location update method;
FIG. 5 is a flowchart of still another location update method;
FIG. 6 is a flowchart of yet another location update method;
FIG. 7 is a flowchart of yet another location update method;
FIG. 8 is a data exchange diagram;
FIG. 9 is a schematic structural diagram of a home location registrar;
FIG. 10 is a schematic structural diagram of another home location registrar;
FIG. 11 is a schematic structural diagram of a mobile network switch;
FIG. 12 is a schematic structural diagram of an SGSN;
FIG. 13 is a schematic diagram of a location update system; and
FIG. 14 is a schematic diagram of another location update system.

### DETAILED DESCRIPTION

The following clearly and completely describes the technical solutions in the embodiments and comparative examples of the present invention with reference to the accompanying drawings in the embodiments of the present invention. Apparently, the described embodiments and comparative examples are merely a part rather than all of the embodiments and comparative examples of the present invention. For the convenience of description of subsequent embodiments and comparative examples, two application scenarios on which the embodiments and comparative examples of the present invention are based are briefly described first:

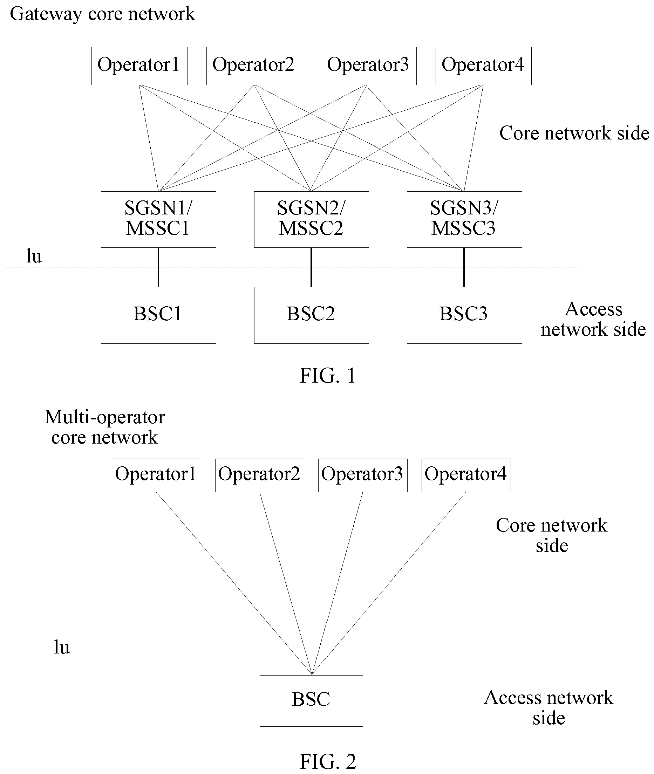

A) FIG. 1 is an architecture of a gateway core network (Gateway Core Network, GWCN for short). In the GWCN network, a GSM/EDGE radio access network (GSM/EDGE Radio Access Network, GERAN for short) is introduced, where a full name of GSM is Global System for Mobile Communications (Global System of Mobile Communication) and a full name of EDGE is Enhanced Data rates for GSM Evolution (Enhanced Data Rate for GSM Evolution). There are three base station controllers (Base Station Controller, BSC for short) on an access network (Access Network, AN for short) side: a BSC1, a BSC2, and a BSC3, where the three BSCs are respectively connected to three serving GPRS support nodes (Serving GPRS Support Node, SGSN for short) on a core network (Core Network, CN for short) side by using an lu interface and are respectively connected to three mobile switching centers (Mobile Switching Center, MSC for short) on the CN side by using the lu interface. There are four operators (Operator) on the CN side: an Operator1, an Operator2, an Operator3, and an Operator4, where the four operators are separately connected to each MSC/SGSN of the three MSCs/SGSNs. In a GWCN network architecture having a network sharing feature, each MSC/SGSN can be used by any Operator, and each Operator can provide a CS service or a PS service for a UE by using any MSC/SGSN.
   When a UE supports a GWCN feature, the UE can register or update a CS domain and a PS domain in or to any Operator's network and report an operator identity of the Operator to an SGSN; or when a UE does not support a GWCN feature, an MSC selects an Operator's network for a CS domain of the UE and an SGSN selects an Operator's network (namely, an operator identity) for a PS domain of the UE.
B) FIG. 2 is a network architecture of a multi-operator core network (Multi-Operator Core Network, MOCN for short). In the MOCN, a GERAN is also introduced, where an AN side has one BSC which is connected to four Operators on a CN side by using an lu interface.
   When a UE supports a GWCN feature, the UE can register or update a CS domain and a PS domain in or to any Operator's network and report an operator identity of the Operator to an SGSN, or when a UE does not support a GWCN feature, a BSC selects an Operator's network (namely, an operator identity) for a CS domain and a PS domain of the UE, and reports the selected operator identity to an SGSN.

In an LTE network or a UTRAN network, the BSC in the foregoing two scenarios may also be an Evolved base station (Envolved NodeB, eNB for short) or a radio network controller (Radio Network Controller, RNC for short).

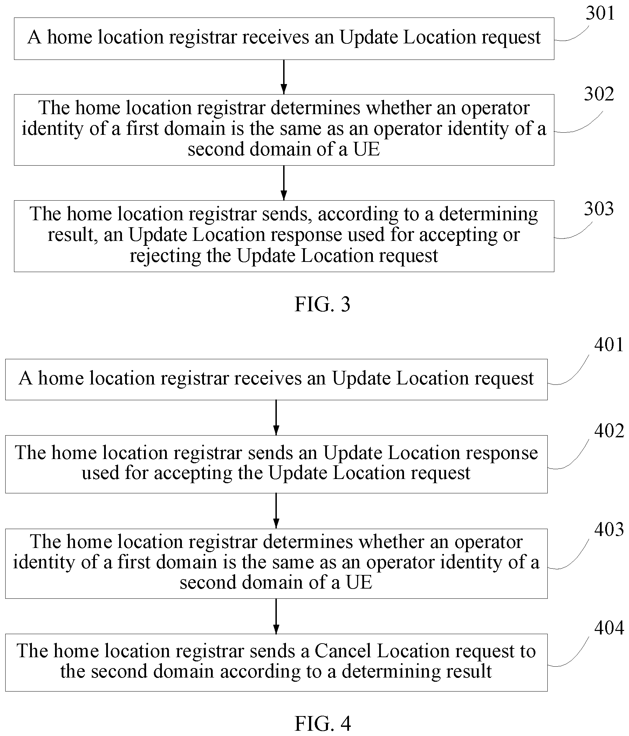

An embodiment of the present invention provides a location update method. As shown in FIG. 3, the method includes the following steps:
301: A home location registrar receives an Update Location request.

The home location registrar in this embodiment of the present invention may be an HLR or an HSS.

The Update Location request includes an operator identity of a first domain of a UE. The first domain may be a CS domain or a PS domain.
302: The home location registrar determines whether the operator identity of the first domain is the same as an operator identity of a second domain of the UE.

When the first domain is the CS domain, the second domain is the PS domain; or when the first domain is the PS domain, the second domain is the PS domain.

When determining that the Update Location request includes at least one of the following: an indication that the UE does not support a gateway core network GWCN/a multi-operator core network MOCN, an indication that the UE does not execute joint registration, and an indication that the UE does not execute joint location update, the home location registrar may determine whether the operator identity of the first domain is the same as the operator identity of the second domain. Certainly, the home location registrar may also ignore whether the Update Location request includes the at least one indication but directly performs the determining.

In this embodiment of the present invention, the operator identity of the CS domain may include at least one of the following: a public land mobile network identity PLMN ID, a mobile switching center address MSC Address, and a visitor location register number VLR Number. The operator identity of the PS domain may include at least one of the following: a public land mobile network identity PLMN ID, a serving general packet radio service GPRS support node address SGSN Address, and an SGSN number SGSN Number.

Before the determining, the home location registrar has stored the operator identity of the second domain.

The Update Location request may also be an Update Location request message or an Update Location message, where both the Update Location request message and the Update Location message express a same meaning.
303: The home location registrar sends, according to a determining result, an Update Location response used for accepting or rejecting the Update Location request.

For example, when the determining result indicates that the operator identity of the first domain is different from the operator identity of the second domain of the UE, the home location registrar rejects the Update Location request and sends an Update Location response used for accepting the Update Location request to a mobile network switch that sends the Update Location request. The Update Location response may include the operator identity of the first domain or the operator identity of the second domain. The mobile network switch may learn a rejection cause according to the operator identity of the first domain, so as to avoid re-selecting the operator identity of the first domain during operator re-selection. The mobile network switch may learn a rejection cause according to the operator identity of the second domain, and may further select, according to the rejection cause, an operator corresponding to the operator identity of the second domain for the first domain. The mobile network switch in this embodiment of the present invention may include a mobile switching center MSC or a serving general packet radio service GPRS support node SGSN. In another case, when the determining result indicates that the operator identity of the first domain is the same as the operator identity of the second domain of the UE, the home location registrar accepts the Update Location request. After the home location registrar rejects the Update Location request, the mobile network switch that sends the Update Location request in the first domain can obtain a new operator identity during next location update, and then sends an Update Location request including the new operator identity to the home location registrar.

When the operator identity of the first domain is different from the operator identity of the second domain, the home location registrar may reject the Update Location request from the first domain (hereinafter briefly referred to as rejecting the first domain) and send a Cancel Location request to the second domain (hereinafter briefly referred to as canceling the second domain), or may only reject the first domain or only cancel the second domain. For example, the operator identity of the first domain is 46000 and the operator identity of the second domain is 46001. The home location registrar may reject the first domain or/and cancel the second domain; in this case, both the first domain and the second domain can obtain an operator identity 46002 in a process of re-performing location update. Alternatively, the home location registrar only cancels the second domain; in this case, the second domain can obtain an operator identity 46000 (the same as the operator identity of the first domain) in a process of re-performing location update.

It should be noted that, before a same operator identity is obtained for the first domain and the second domain, the number of times that the home location registrar rejects the first domain and/or cancels the second domain is not limited to 1. In this embodiment of the present invention, an example that location update for the first domain is rejected once and/or location update for the second domain is canceled once is used for description. In an actual application, a home location registrar may need to perform determining for multiple times and perform a rejection and/or cancellation step for multiple times, so as to enable an operator identity of a first domain to be the same as an operator identity of a second domain. For example, if the operator identity of the first domain is 46000 and the operator identity of the second domain is 46001, the home location registrar determines that the operator identity of the first domain is different from the operator identity of the second domain, and rejects the first domain. In a second location update process of the first domain, an operator identity obtained for the first domain is 46002; in this case, the home location registrar determines for a second time that the operator identity of the first domain is still different from the operator identity of the second domain, and rejects the first domain again. In a third location update process of the first domain, an operator identity obtained for the first domain is 46000; in this case, the home location registrar determines that the operator identity of the first domain is the same as the operator identity of the second domain, and accepts an Update Location request of the first domain.

It should be further noted that an operator identity obtained for the first domain or the second domain when location update is re-performed is not limited to being different from an operator identity obtained during previous location update. For example, if an operator identity obtained for the first domain during location update is 46000 and an operator identity of the second domain is 46001, the home location registrar rejects the first domain. In a subsequent location update process of the first domain, an operator identity obtained for the first domain may be still 46000; in this case, the home location registrar rejects the first domain again. In subsequent description of this embodiment of the present invention, that a re-obtained operator identity is different from a previously obtained operator identity is used as an example for description, which is not limited in an actual application.

The home location registrar in this embodiment of the present invention may be a home location register (Home Location Register, HLR for short) or a home subscriber server (Home Subscriber Server, HSS for short).

According to the location update method provided by this embodiment of the present invention, it can be determined whether an operator identity of a first domain is the same as an operator identity of a second domain when location update is requested in the first domain. According to a determining result, a home location registrar sends an Update Location response used for accepting or rejecting an Update Location request, which avoids selecting different operators for a CS service and a PS service of a UE, thereby preventing a problem of disordered charging caused therefrom.

A comparative example of the present invention provides a location update method. As shown in FIG. 4, the method includes the following steps:
401: A home location registrar receives an Update Location request.

The Update Location request includes an operator identity of a first domain of a UE.
402: The home location registrar sends an Update Location response used for accepting the Update Location request.

The home location registrar accepts the Update Location request of the first domain and sends the Update Location response used for accepting the Update Location request.
403: The home location registrar determines whether the operator identity of the first domain is the same as an operator identity of a second domain of the UE.

The operator identity of the second domain is received and saved before the home location registrar receives the Update Location request of the first domain.

When determining that the Update Location request includes at least one of the following: an indication that the UE does not support a gateway core network GWCN/a multi-operator core network MOCN, an indication that the UE does not execute joint registration, and an indication that the UE does not execute joint location update, the home location registrar may determine whether the operator identity of the first domain is the same as the operator identity of the second domain. Certainly, the home location registrar may also ignore whether the at least one indication is included but directly performs or does not perform the determining.
404: The home location registrar sends a Cancel Location request to the second domain according to a determining result.

For example, when the home location registrar determines that the operator identity of the first domain is different from the operator identity of the second domain of the UE, the home location registrar sends the Cancel Location request to the second domain, so that the second domain re-acquires an operator identity when an Update Location request is sent next time. The Cancel Location request may include the operator identity of the first domain, so that a mobile network switch that sends the Update Location request selects, for the second domain, an operator corresponding to the operator identity of the first domain. In another case, when the home location registrar determines that the operator identity of the first domain is the same as the operator identity of the second domain of the UE, the home location registrar does not send the Cancel Location request to the second domain.

The Update Location request may also be an Update Location request message or an Update Location message, where both the Update Location request message and the Update Location message express a same meaning.

An operator identity obtained for the first domain or the second domain when location update is re-performed is not limited to being different from an operator identity obtained during previous location update.

The first domain is a circuit switched CS domain and the second domain is a packet switched PS domain, or the second domain is a CS domain and the first domain is a PS domain.

The home location registrar in this comparative example of the present invention may be an HLR or an HSS.

According to the location update method provided by this comparative example of the present invention, it can be determined whether an operator identity of a first domain is the same as an operator identity of a second domain when the first domain sends an Update Location request. When a determining result indicates that the operator identity of the first domain is different from the operator identity of the second domain, a home location registrar sends a Cancel Location request to the second domain, so that the second domain re-obtains an operator identity when an Update Location request is sent next time, which avoids selecting different operators for the first domain and the second domain and therefore resolves a problem of disordered charging for different operators.

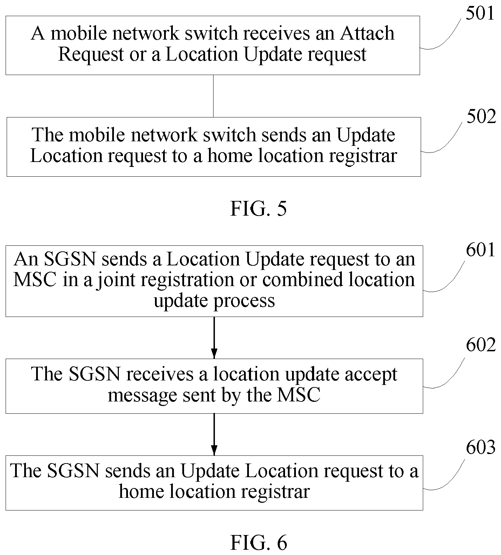

An embodiment of the present invention provides a location update method. As shown in FIG. 5, the method includes the following steps:
501: A mobile network switch receives a Registration Request or a Location Update request.

The Registration Request or the Location Update request is used for requesting registration for a first domain or a second domain, or requesting location update for a first domain or a second domain.
502: The mobile network switch sends an Update Location request to a home location registrar.

The Update Location request includes an operator identity of the first domain and at least one of the following: an indication that a UE does not support a GWCN/MOCN, an indication that the UE does not execute joint registration, and an indication that the UE does not execute joint update, so that the home location registrar determines whether the operator identity of the first domain is the same as an operator identity of the second domain according to the foregoing at least one indication.

Optionally, the Update Location request includes one indication, where the indication is used for indicating whether the home location registrar determines whether the operator identity of the first domain is the same as an operator identity of the second domain. For example, when the indication is 1, the home location registrar determines whether the operator identity of the first domain is the same as the operator identity of the second domain; and when the indication is 0, the home location registrar does not determine whether the operator identity of the first domain is the same as the operator identity of the second domain. Alternatively, when the indication is 0, the home location registrar determines whether the operator identity of the first domain is the same as the operator identity of the second domain; and when the indication is 1, the home location registrar does not determine whether the operator identity of the first domain is the same as the operator identity of the second domain. In subsequent several embodiments, the Update Location request may include one indication. For details, reference may be made to the foregoing description.

Specifically, when a UE does not support a GWCN/MOCN indication, and the UE does not have an indication to execute joint registration, and the UE does not have an indication to execute joint update, the home location registrar determines whether the operator identity of the first domain is the same as the operator identity of the second domain; and when at least one of the following conditions is met: the UE supports the GWCN/MOCN, the UE executes joint registration, and the UE executes joint update, the home location registrar does not determine whether the operator identity of the first domain is the same as the operator identity of the second domain.

The first domain is a circuit switched CS domain and the second domain is a packet switched PS domain, or the second domain is a CS domain and the first domain is a PS domain.

The home location registrar in this embodiment of the present invention may be an HLR or an HSS.

The mobile network switch in this embodiment of the present invention may be an SGSN or an MSC.

According to the location update method provided by this embodiment of the present invention, when at least one of the following cases occurs: a UE supports a GWCN/MOCN, the UE executes joint registration, and the UE executes joint update, a home location registrar does not determine whether an operator identity of a first domain is the same as an operator identity of a second domain, which can save a signaling overhead.

A comparative example of the present invention provides a location update method. As shown in FIG. 6, the method includes the following steps:
601: An SGSN sends a Location Update request to an MSC in a joint registration or joint location update process.

In the joint registration or joint location update process, the SGSN sends the Location Update request (Location Update) message to the MSC, so as to initiate registration or location update in the CS domain.
602: The SGSN receives a location update accept message sent by the MSC.

After sending the location update accept message to the SGSN, the MSC sends an Update Location request to a home location registrar, where the Update Location request includes an operator identity of the CS domain. The home location registrar sends an Update Location response used for accepting the Update Location request and accepts the location update of the CS domain.
603: The SGSN sends an Update Location request to the home location registrar.

After the location update of the CS domain is successful, the SGSN sends the Update Location request to the home location registrar, reports an operator identity of a PS domain, and requests location update of the PS domain.

Optionally, before the SGSN sends the Location Update request to the MSC, the SGSN may further send the Update Location request to the home location registrar, report an operator identity of a PS domain, and request location update of the PS domain. When the home location registrar sends an Update Location response used for rejecting the Update Location request, that is, when a Location Update request of the PS domain is rejected, the SGSN then performs steps 601 to 602 in sequence.

Optionally, in scenarios of common registration or common location update, and joint registration or joint location update, the SGSN may further report, in a process of reporting the Update Location request to the home location registrar, an indication that a UE does not support a GWCN/MOCN, an indication that a UE does not execute joint registration, or an indication that a UE does not execute joint update to the home location registrar. When the UE does not support a GWCN/MOCN indication, and the UE does not have an indication to execute joint registration, and the UE does not have an indication to execute joint update, the home location registrar determines whether the operator identity of the CS domain is the same as the operator identity of the PS domain.

It is assumed that, when values of indication flags of the foregoing three indications are 1, it indicates that the UE supports the GWCN/MOCN, the UE executes joint registration, and the UE executes joint location update, respectively; and when the values of the flags are 0, it indicates that the UE does not support the GWCN/MOCN, the UE does not execute joint registration, and the UE does not execute joint location update, respectively. In this case, when a flag value of each indication of the foregoing three indications is 0, the home location registrar determines whether the operator identity of the CS domain is the same as the operator identity of the PS domain. Alternatively, it is assumed that, when values of indication flags of the foregoing three indications are 0, it indicates that the UE supports the GWCN/MOCN, the UE executes joint registration, and the UE executes joint location update, respectively; and when the values of the flags are 1, it indicates that the UE does not support the GWCN/MOCN, the UE does not execute joint registration, and the UE does not execute joint location update, respectively. In this case, when a flag value of each indication of the foregoing three indications is 1, the home location registrar determines whether the operator identity of the CS domain is the same as the operator identity of the PS domain.

The SGSN may also report a corresponding indication to the home location registrar only when the UE supports the GWCN/MOCN, the UE executes joint registration, or the UE executes joint location update, where the indication does not include a flag. The home location registrar does not determine whether the operator identity of the CS domain is the same as the operator identity of the PS domain as long as the home location registrar receives at least one of the foregoing three indications.

In addition, in a process of reporting the Update Location request to the home location registrar by the MSC, the MSC may also report the foregoing three indications to the home location registrar. When a flag value of at least one of the foregoing three indications received by the home location registrar is 1, an HSS does not determine whether the operator identity of the CS domain is the same as the operator identity of the PS domain. Alternatively, the home location registrar does not determine whether the operator identity of the CS domain is the same as the operator identity of the PS domain as long as the home location registrar receives at least one of the foregoing three indications.

The home location registrar in this comparative example of the present invention may be an HLR or an HSS.

"Joint registration (joint location update)" indicates "joint registration or joint location update". In subsequent expressions, a manner of "joint registration (joint location update)" is uniformly used for description.

According to the location update method provided by this embodiment of the present invention, in a joint registration (joint location update) process, location update of a CS domain can be first initiated; and after the location update of the CS domain is successful, a Location Update request of a PS domain is initiated. Compared with the prior art in which location update of a PS domain is first initiated in joint registration (joint location update), this can avoid a location update failure of a CS domain due to location update of a PS domain.

To enable a person skilled in the art to understand the technical solutions provided by the embodiments of the present invention more clearly, the following describes in detail the location update methods shown in FIG. 3 to FIG. 6 by using a specific comparative example.

In this comparative example of the present invention, both "registration (location update)" and registration (update) indicate "registration or location update". In subsequent expressions, a manner of "registration (location update)" is uniformly used for description.

"Joint registration (joint location update)" indicates "joint registration or joint location update". In subsequent expressions, a manner of "joint registration (joint location update)" is uniformly used for description.

In this comparative example of the present invention, that a home location registrar is an HSS is used as an example for description. In an actual application, a home location registrar may also be but is not limited to an HLR. That a mobile network switch is an SGSN and an MSC is used as an example for description. In an actual application, a mobile network switch is not limited to an SGSN and an MSC.

The operator identity described in this comparative example of the present invention may be but is not limited to a PLMN ID. When an SGSN sends an operator identity to an HSS, the operator identity may also be an SGSN address (SGSN Address) or an SGSN number (SGSN Number); and when an MSC sends an operator identity to an HSS, the operator identity may also be an MSC address (MSC Address) or a visitor location register (Visitor Location Register, VLR for short) number (VLR Number). The HSS can uniquely obtain a PLMN ID according to any one of the SGSN Address, the SGSN Number, the MSC Address, and the VLR Number. In this embodiment of the present invention, a PLMN ID is used as an operator identity for description. An SGSN or an MSC directly sends a PLMN ID to an HSS.

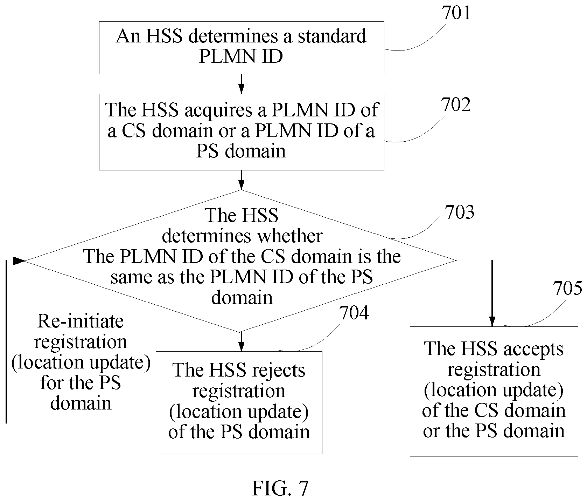

As shown in FIG. 7, a location update method provided by a comparative example of the present invention includes the following steps:
701: An HSS determines a standard PLMN ID.

The standard PLMN ID (namely, a standard operator identity) is a basis for the HSS to cancel or reject registration (location update) of a CS domain and/or a PS domain. The HSS may determine a PLMN ID of the CS domain as the standard PLMN ID, or may determine a PLMN ID of the PS domain as the standard PLMN ID. When the PLMN ID of the CS domain is the standard PLMN ID, if the PLMN ID of the CS domain is different from the PLMN ID of the PS domain, the registration (location update) of the PS domain is rejected (canceled) based on the PLMN ID of the CS domain, so as to enable a PLMN ID obtained for the PS domain in a subsequent registration (location update) process to be the same as the PLMN ID of the CS domain (namely, the standard PLMN ID).

"Rejection (cancellation)" means "rejection or cancellation".

It should be noted that the determining a PLMN ID of the CS domain as the standard PLMN ID is not to determine a specific PLMN ID of the CS domain as the standard PLMN ID. PLMN IDs obtained for the CS domain in registration and in subsequent at least one location update process may be different and a PLMN ID obtained for the CS domain is the standard PLMN ID. Therefore, the standard PLMN ID may be understood as the PLMN ID obtained for the CS domain.

The foregoing provides description by using the PLMN ID of the CS domain as the standard PLMN ID. In an actual application, an HSS may also determine a PLMN ID of a PS domain as the standard PLMN ID. In subsequent description of this comparative example of the present invention, the PLMN ID of the CS domain is used as the standard PLMN ID.
702: The HSS acquires a PLMN ID of a CS domain or a PLMN ID of a PS domain.
   (1) When registration (location update) is performed in the CS domain, the HSS acquires the PLMN ID of the CS domain.
   (2) When registration (location update) is performed in the PS domain, the HSS acquires the PLMN ID of the PS domain.
   (3) When registration (location update) is performed in both the CS domain and the PS domain, the HSS acquires the PLMN ID of the CS domain and the PLMN ID of the PS domain.

In the GWCN network shown in scenario (A) and the MOCN network shown in scenario (B), the HSS receives an Update Location (Update Location) request reported by an MSC, where the Update Location request carries the PLMN ID of the CS domain; and the HSS receives an Update Location request reported by an SGSN, where the Update Location request carries the PLMN ID of the PS domain.
703: The HSS determines whether the PLMN ID of the CS domain is the same as the PLMN ID of the PS domain.

In (2), that is, when registration (location update) is performed in the PS domain, the HSS determines whether the PLMN ID, which is reported by the SGSN, of the PS domain is the same as a PLMN ID, which is stored by the HSS, of the CS domain. The stored PLMN ID of the CS domain is a PLMN ID of the CS domain that is obtained and stored by the HSS during last registration (location update) of the CS domain before the registration (location update) is performed in the PS domain. When a determining result of the HSS indicates that the PLMN ID, which is reported by the SGSN, of the PS domain is different from the PLMN ID, which is stored by the HSS, of the CS domain, step 704 is performed and the registration (location update) of the PS domain is rejected; and when a determining result of the HSS indicates that the PLMN ID, which is reported by the SGSN, of the PS domain is the same as the PLMN ID, which is stored by the HSS, of the CS domain, step 705 is performed and the registration (location update) of the PS domain is accepted.

In (3), that is, when registration (location update) is performed in both the CS domain and the PS domain, the HSS performs step 705 to accept the registration (location update) of the CS domain and store the PLMN ID of the CS domain; and the HSS determines whether the PLMN ID, which is reported by the SGSN, of the PS domain is the same as the PLMN ID, which is stored by the HSS, of the CS domain. When a determining result of the HSS indicates that the PLMN ID, which is reported by the SGSN, of the PS domain is different from the PLMN ID, which is stored by the HSS, of the CS domain, step 704 is performed and the registration (location update) of the PS domain is rejected; and when a determining result of the HSS indicates that the PLMN ID, which is reported by the SGSN, of the PS domain is the same as the PLMN ID, which is stored by the HSS, of the CS domain, step 705 is performed and the registration (location update) of the PS domain is accepted. It should be noted that the PLMN ID, which is stored by the HSS, of the CS domain may be a PLMN ID of the CS domain that is stored by the HSS before the HSS performs step 705, or may be a PLMN ID of the CS domain that is stored by the HSS after the HSS performs step 705, that is, an updated and replaced PLMN ID of the CS domain.

Particularly, in (1), that is, when registration (location update) is performed in the CS domain, because the PLMN ID of the CS domain is the standard PLMN ID, the HSS does not determine whether the PLMN ID, which is reported by the MSC, of the CS domain is the same as a PLMN ID, which is stored by the HSS, of the PS domain, but directly performs step 705 to accept the registration (location update) of the CS domain and store the PLMN ID of the CS domain. The PLMN ID, which is stored by the HSS, of the PS domain is a PLMN ID of the PS domain obtained and stored by the HSS during last registration (location update) of the PS domain before the registration (location update) is performed in the CS domain.
704: The HSS rejects registration (location update) of the PS domain.

The HSS sends an Update Location response used for rejecting an Update Location request and rejects the registration (location update) of the PS domain, so that a new PLMN ID is obtained for the PS domain during subsequent registration (location update).

Optionally, in (3), that is, when registration (location update) is performed in both the CS domain and the PS domain, when the determining result of the HSS indicates that the PLMN ID, which is reported by the SGSN, of the PS domain is different from the PLMN ID, which is stored by the HSS, of the CS domain, the HSS may also reject the registration (location update) of the CS domain and the PS domain at the same time, so that a new PLMN ID is obtained separately for the CS domain and the PS domain during subsequent registration (location update), where the PLMN ID obtained for the CS domain is used as the standard PLMN ID.

Optionally, when the registration (location update) of the PS domain is rejected, the HSS may further send the stored PLMN ID of the CS domain (the standard PLMN ID) to the PS domain, so that the PLMN ID, which is sent by the HSS, of the CS domain is used as the PLMN ID of the PS domain for subsequent registration (location update) of the PS domain. Specifically, the HSS sends the stored PLMN ID of the CS domain to the SGSN. In a subsequent registration (location update) process of the PS domain, the SGSN selects the received PLMN ID of the CS domain as the PLMN ID of the PS domain.

The HSS sends the stored PLMN ID of the CS domain to the PS domain, so that a PLMN ID same as the CS domain can be obtained for the PS domain by re-performing registration (location update) once, thereby reducing the number of times of re-performing registration (location update) of the PS domain and saving network resources.
705: The HSS accepts registration (location update) of the CS domain or the PS domain.

The HSS sends an Update Location response used for accepting an Update Location request. After the HSS accepts the registration (location update) of the CS domain or the PS domain, registration (location update) with (to) a network of an operator identified by the PLMN ID of the CS domain or the PLMN ID of the PS domain is implemented in the CS domain or the PS domain.

In scenario 1 of this comparative example of the present invention, registration is initiated in the CS domain and the MSC reports a PLMN ID 46000 of the CS domain to the HSS. The HSS does not perform the determining in step 703, but directly performs step 705 to accept the registration of the CS domain and store the PLMN ID 46000 of the CS domain. The HSS determines that the stored PLMN ID 46000 of the CS domain is different from a PLMN ID 46001, which is stored during previous registration of the PS domain, of the PS domain; in this case, the HSS sends a Cancel Location (Cancel Location) request to the SGSN and cancels the previous registration of the PS domain. Optionally, the HSS sends the PLMN ID 46000 of the CS domain to the SGSN by using the Cancel Location request (Cancel Location), so that, in a subsequent registration process of the PS domain, the SGSN selects the PLMN ID 46000 for the PS domain and reports the PLMN ID 46000 of the PS domain to the HSS. The HSS performs step 703 to determine that the new PLMN ID 46000 of the PS domain is the same as the stored PLMN ID 46000 of the CS domain; in this case, the HSS performs step 705 to accept re-registration of the PS domain.

In scenario 2 of this comparative example of the present invention, registration is initiated in the PS domain, and the SGSN sends an Update Location (Update Location) request to the HSS and reports a PLMN ID 46001 of the PS domain. The HSS determines that the PLMN ID 46001, which is reported by the SGSN, of the PS domain is the same as a PLMN ID 46001, which is stored by the HSS, of the CS domain; in this case, the HSS performs step 705 to accept the registration of the PS domain. After that, registration is initiated in the CS domain, and the MSC sends an Update Location (Update Location) request to the HSS and reports a PLMN ID 46000 of the CS domain. The HSS does not perform the determining in step 703, but directly performs step 705 to accept the registration of the CS domain and store the PLMN ID 46000 of the CS domain. Then, the HSS determines that the stored PLMN ID 46000 of the CS domain is different from the PLMN ID 46001, which is stored during the previous registration of the PS domain, of the PS domain; in this case, the HSS cancels the previous registration of the PS domain. Optionally, the HSS sends the PLMN ID 46000 of the CS domain to the SGSN by using the Cancel Location (Cancel Location) request, so that, in a subsequent registration process of the PS domain, the SGSN selects the PLMN ID 46000 for the PS domain and reports the PLMN ID 46000 of the PS domain to the HSS. The HSS performs step 703 to determine that the PLMN ID 46000 of the PS domain is the same as the stored PLMN ID 46000 of the CS domain; in this case, the HSS performs step 705 to accept re-registration of the PS domain.

In joint registration (joint location update), joint registration (joint location update) is executed for the CS domain and the PS domain in an LTE network. A first PLMN ID in the LTE network is used for a PS domain service of the LTE network in the PS domain, and a second PLMN ID in a 2G or 3G network is used for a CS domain service of the 2G or 3G network in the CS domain. When a UE executes a circuit switched fallback (CS Fallback, CSFB for short) process, or when a UE moves to a 2G or 3G network from an LTE network, the second PLMN ID in the 2G or 3G network continues to be used for the CS domain service of the 2G or 3G network in the CS domain, but a PS domain service of the 2G or 3G network may be provided by using a third PLMN ID (not the second PLMN ID) in the 2G or 3G network.

In scenario 3 of this comparative example of the present invention, registration with a 2G or 3G network is already implemented in the CS domain and the PS domain, and PLMN IDs of the CS domain and the PS domain are both a first PLMN ID 46000. Then, joint registration is executed in an LTE network. A UE registers for a second PLMN ID 46001 in the LTE network and registers for a third PLMN ID 46002 in the 2G or 3G network for the CS domain. The HSS does not perform the determining in step 703, but directly performs step 705 to accept the registration of the CS domain and store the third PLMN ID 46002 of the CS domain. The HSS determines that the third PLMN ID 46002 for requesting registration for the CS domain is different from the first PLMN ID 46000 registered in the 2G or 3G network for the PS domain; in this case, the HSS sends a Cancel Location (Cancel Location) request to the SGSN and cancels the registration of the PS domain. Optionally, the HSS sends the third PLMN ID 46002 of the CS domain to the SGSN by using the Cancel Location (Cancel Location) request, so that, in subsequent registration of the PS domain, the SGSN selects the third PLMN ID 46002 for the PS domain and reports the PLMN ID 46002 of the PS domain to the HSS. The HSS performs step 703 to determine that the PLMN ID 46002 of the PS domain is the same as the stored third PLMN ID 46002 of the CS domain; in this case, the HSS performs step 705 to accept re-registration of the PS domain.

Optionally, when the HSS cancels the registration of the PS domain, the HSS may further send a rejection cause value to the SGSN, where the rejection cause value may be that the PLMN IDs of the PS domain and the CS domain are different, for example, the third PLMN ID 46002 of the CS domain is different from the first PLMN ID 46000 of the PS domain.

It should be noted that, in a joint registration or joint location update process in the LTE network or an LTE-A network, the second PLMN ID 46001 registered in the LTE network (PS domain) is allowed to be different from the third PLMN ID registered in the 2G or 3G network for the CS domain, and therefore the HSS accepts the second PLMN ID 46001 in the LTE network in the joint registration or joint location update process of the LTE network.

In scenario 4 of this comparative example of the present invention:
(A) In a process of executing joint registration or joint location update in a 2G or 3G network, the SGSN sends a Location Update (Location Update) request to the MSC. The MSC sends an Update Location (Update Location) request to the HSS and reports a PLMN ID 46000 of the CS domain. The HSS does not perform the determining in step 703, but directly performs step 705 to accept the registration of the CS domain and store the PLMN ID 46000 of the CS domain. Registration with the 2G or 3G network is implemented in the CS domain. Then, the SGSN sends an Update Location (Update Location) request to the HSS and reports a PLMN ID 46000 of the PS domain. The HSS performs step 703 to determine that the PLMN ID 46000 of the PS domain is the same as the stored PLMN ID 46000 of the CS domain and accept re-registration of the PS domain. Registration with the 2G or 3G network is implemented in the PS domain.
B) The SGSN sends an Update Location (Update Location) request to the HSS and reports a PLMN ID 46000 of the PS domain. The HSS performs step 703. If it is determined that the PLMN ID 46000 of the PS domain is different from a stored PLMN ID 46001 of the CS domain, the HSS rejects registration of the PS domain. The SGSN sends a Location Update (Location Update) request to the MSC and repeatedly executes (A).

Further, in scenario 3 and scenario 4, when the HSS rejects (cancels) the registration of the PS domain, the SGSN may further send a rejection indication to a mobility management entity (Mobility Management Entity, MME for short), where the rejection indication is used for instructing the MME to retain a UE context, so that the SGSN can acquire the UE context from the MME in a re-registration process of the PS domain.

In the foregoing four application scenarios, this comparative example of the present invention is described by using an example that the CS domain and the PS domain perform registration (joint registration). In an actual application, an implementation manner of performing location update (joint location update) for the CS domain and the PS domain is the same as an implementation manner of performing registration (joint registration) for the CS domain and the PS domain, and details are not described again in this comparative example of the present invention.

Optionally, in a process of sending, by the MSC or the SGSN, an Update Location (Update Location) request to the HSS and reporting a PLMN ID, the MSC or SGSN may further report, to the HSS, an indication whether a UE supports a GWCN/MOCN, where the indication a UE supports a GWCN/MOCN is used for indicating that the UE can actively select a PLMN ID. If the indication a UE supports a GWCN/MOCN, which is received by the HSS, is yes, the HSS does not perform the determining in step 703 but directly accepts the registration (location update) of the CS domain and the PS domain. If the indication a UE supports a GWCN/MOCN, which is received by the HSS, is no, the HSS performs the determining in step 703.

Alternatively, in a process of sending, by the MSC or the SGSN, an Update Location (Update Location) request to the HSS and reporting a PLMN ID, the MSC or the SGSN may report, to the HSS, an indication whether to perform joint registration (location update). If the indication to perform joint registration (location update), which is received by the HSS, is yes, the HSS does not perform the determining in step 703 but directly accepts the registration (location update) of the CS domain and the PS domain. If the indication to perform joint registration (location update), which is received by the HSS, is no, the HSS performs the determining in step 703.

In this comparative example of the present invention, an example of using the PLMN ID of the CS domain as the standard PLMN ID is used for description. In an actual application, the PLMN ID of the PS domain may also be used as the standard PLMN ID and this comparative example of the present invention is implemented in combination with a characteristic of using the PLMN ID of the PS domain as the standard PLMN ID, and details are not described herein again.

The following further describes this comparative example of the present invention with reference to a GWCN network shown in FIG. 1 and an MOCN network shown in FIG. 2.

### a) In the GWCN network:

Registration or location update is initiated in a CS domain and a PS domain. An MSC and an SGSN separately send an Update Location (Update Location) request to an HSS, and report a PLMN ID of the CS domain and a PLMN ID of the PS domain to the HSS. The HSS sends an Update Location Ack message (Update Location Ack) to the MSC and accepts the registration of the CS domain. At the same time, the HSS determines that the stored PLMN ID of the CS domain is different from a PLMN ID, which is stored during previous registration of the PS domain, of the PS domain; in this case, the HSS sends a Cancel Location (Cancel Location) request to the SGSN and cancels the previous registration (location update) of the PS domain. The HSS determines that the PLMN ID of the CS domain is different from the PLMN ID of the PS domain, and sends an Update Location Acknowledgement message (Update Location Ack) to the SGSN to reject the registration of the PS domain, where the message carries a rejection indication. After receiving the rejection indication, the SGSN sends a Registration Reject message (Attach Reject) to a UE, so as to re-initiate registration in the PS domain.

After registration with a same PLMN ID network is already implemented in the CS domain and the PS domain, when location area update (Location Area Update, LAU for short) is initiated for the CS domain, the MSC sends an Update Location (Update Location) request to the HSS and reports a PLMN ID of the CS domain to the HSS. The HSS sends an Update Location Acknowledgement message (Update Location Ack) to the MSC and accepts the registration of the CS domain. The HSS determines that the stored PLMN ID of the CS domain is different from a PLMN ID, which is stored during previous registration of the PS domain, of the PS domain; in this case, the HSS sends a Cancel Location (Cancel Location) request to the SGSN and cancels the previous registration (location update) of the PS domain. When route area update (Route Area Update, RAU for short) is initiated for the PS domain, the SGSN sends an Update Location (Update Location) request to the HSS and reports a PLMN ID of the PS domain to the HSS. The HSS determines that the PLMN ID of the CS domain is different from the PLMN ID of the PS domain, and sends an Update Location Acknowledgement message (Update Location Ack) to the SGSN to reject the registration of the PS domain, where the message carries a rejection indication. After receiving the rejection indication, the SGSN sends a Registration Reject message (Attach Reject) to a UE, so as to re-initiate registration in the PS domain.

When a UE initiates registration (location update) in a PS domain of a 2G or 3G network, the SGSN sends an Update Location message to the HSS. The SGSN receives Update Location Acknowledgement information sent by the HSS. If the HSS rejects the registration of the PS domain, the SGSN sends a Context Acknowledgement message (Context Acknowledgement) to an MME, where the message carries a rejection indication.

In the foregoing process, the Update Location Acknowledgement message (Update Location Ack) may also be replaced with an Insert Subscriber Data message (Insert Subscriber Data).

### b) In the MOCN network:

A UE initiates registration or location update in a CS domain and a PS domain. A BSC respectively sends PLMN IDs selected for the CS domain and the PS domain to an MSC and an SGSN. The MSC and the SGSN separately send an Update Location (Update Location) request to an HSS, and report a PLMN ID of the CS domain and a PLMN ID of the PS domain to the HSS. The HSS sends an Update Location Acknowledgement message (Update Location Ack) to the MSC and accepts the registration of the CS domain. At the same time, the HSS determines that the stored PLMN ID of the CS domain is different from a PLMN ID, which is stored during previous registration of the PS domain, of the PS domain; in this case, the HSS sends a Cancel Location (Cancel Location) request to the SGSN and cancels the previous registration (location update) of the PS domain. The HSS determines that the PLMN ID of the CS domain is different from the PLMN ID of the PS domain, and sends an Update Location Acknowledgement message (Update Location Ack) to the SGSN to reject the registration of the PS domain, where the message carries a rejection indication. After receiving the rejection indication, the SGSN sends a Reroute Command message (Reroute Command) to the BSC, so as to re-initiate registration in the PS domain.

After registration with a same PLMN ID network is already implemented in the CS domain and the PS domain, when location area update (Location Area Update, LAU for short) is initiated for the CS domain, the BSC sends a PLMN ID selected for the CS domain to the MSC. The MSC sends an Update Location (Update Location) request to the HSS and reports the PLMN ID of the CS domain to the HSS. The HSS sends an Update Location Acknowledgement message (Update Location Ack) to the MSC and accepts the registration of the CS domain. At the same time, the HSS determines that the stored PLMN ID of the CS domain is different from a PLMN ID, which is stored during previous registration of the PS domain, of the PS domain; in this case, the HSS sends a Cancel Location (Cancel Location) request to the SGSN and cancels the previous registration (location update) of the PS domain. When route area update (Route Area Update, RAU for short) is initiated for the PS domain, the BSC sends a PLMN ID selected for the PS domain to the SGSN. The SGSN sends an Update Location (Update Location) request to the HSS and reports the PLMN ID of the PS domain to the HSS. The HSS determines that the PLMN ID of the CS domain is different from the PLMN ID of the PS domain, and sends an Update Location Acknowledgement message (Update Location Ack) to the SGSN to reject the registration of the PS domain, where the message carries a rejection indication. After receiving the rejection indication, the SGSN sends a Reroute Command message (Reroute Command) to the BSC, so as to re-initiate registration in the PS domain.

When the UE initiates registration or location update in a PS domain of a 2G or 3G network, the SGSN sends an Update Location message to the HSS. The SGSN receives Update Location Acknowledgement information sent by the HSS. If the HSS rejects the registration of the PS domain, the SGSN sends a Context Acknowledgement message (Context Acknowledgement) to an MME, where the message carries a rejection indication.

In the foregoing process, the Update Location Acknowledgement message (Update Location Ack) may also be replaced with an Insert Subscriber Data message (Insert Subscriber Data).

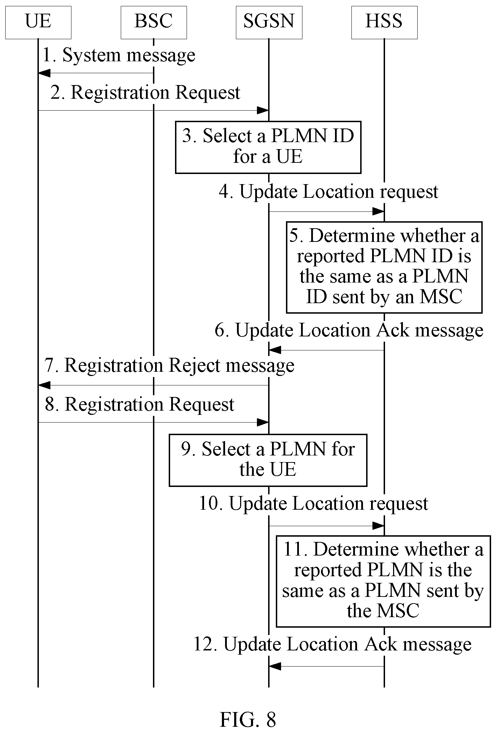

In the foregoing comparative example, an interaction process between the HSS and the SGSN is shown in FIG. 8.
1: A UE receives system information (System Information) sent by a BSC.
2: The UE sends a Registration Request (Attach Request) to an SGSN and requests registration of a PS domain.
3: The SGSN selects a PLMN ID 45003 for the PS domain, where the PLMN ID corresponds to an operator Y.
4: The SGSN sends an Update Location (Update Location) request to an HSS and reports, to the HSS, the PLMN selected for the PS domain.
5: The HSS determines that the PLMN ID 45003 reported by the SGSN is different from a PLMN ID 45000 reported by an MSC.
6: The HSS sends an Update Location Acknowledgement message (Update Location Ack) to the SGSN, where the message carries a rejection indication. In addition to the rejection indication, a rejection cause value and a standard PLMN ID 45000 are also carried in the Update Location Acknowledgement message.
7: The SGSN sends Registration Reject (Attach Reject) to the UE and stores the standard PLMN ID 45000 sent by the HSS.
8: The UE re-sends a Registration Request (Attach Request) to the SGSN and requests registration of the PS domain.
9: The SGSN selects the stored standard PLMN ID 45000 as a PLMN ID of the PS domain.
10: The SGSN re-sends an Update Location (Update Location) request to the HSS and reports the PLMN ID 45000 re-selected for the PS domain to the HSS.
11: The HSS determines that the PLMN ID 45000 re-reported by the SGSN is the same as the PLMN ID 45000 reported by the MSC.
12: The HSS sends an Update Location Acknowledgement message (Update Location Ack) to the SGSN, where the message carries an confirmation indication, so as to accept the Registration Request of the PS domain and register the PS domain in a network of an operator X.

According to the location update method provided by this comparative example of the present invention, an HSS can determine whether an operator identity of a CS domain is the same as an operator identity of a PS domain. When a determining result indicates that the operator identity of the CS domain is different from the operator identity of the PS domain, the HSS rejects (cancels) registration (location update) of the CS domain and/or the PS domain, so that the CS domain and/or the PS domain re-performs registration (location update) and obtains a new operator identity in a process of re-performing registration (location update). In addition, when a UE supports a GWCN/MOCN or executes joint registration (joint location update), the HSS does not determine whether the PLMN ID of the CS domain is the same as the PLMN ID of the PS domain. This can avoid selecting different operators for the CS domain and the PS domain, and charging is performed, by one operator, for a CS domain service and a PS domain service of a user according to a unified charging standard.

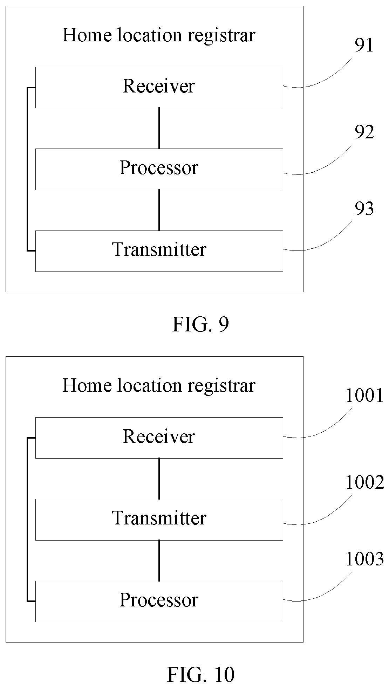

With reference to the method embodiment shown in FIG. 3, an embodiment of the present invention provides a home location registrar. As shown in FIG. 9, the home location registrar includes: a receiver 91, a processor 92, and a transmitter 93.

The receiver 91 is configured to receive an Update Location request, where the Update Location request includes an operator identity of a first domain of a user equipment UE.

The processor 92 is configured to determine whether the operator identity, which is received by the receiver 91, of the first domain is the same as an operator identity of a second domain of the UE.

The transmitter 93 is configured to send, according to a determining result of the processor 92, an Update Location response used for accepting or rejecting the Update Location request.

The first domain is a circuit switched CS domain and the second domain is a packet switched PS domain, or the second domain is a CS domain and the first domain is a PS domain.

The transmitter 93 is configured to: when the determining result of the processor 92 indicates that the operator identity, which is received by the receiver 91, of the first domain is different from the operator identity of the second domain of the UE, send an Update Location response used for rejecting the Update Location request; and
when the determining result of the processor 92 indicates that the operator identity, which is received by the receiver 91, of the first domain is the same as the operator identity of the second domain of the UE, send an Update Location response used for accepting the Update Location request.

The Update Location response that is sent by the transmitter 93 and used for rejecting the Update Location request includes the operator identity of the second domain.

Further, the processor 92 is further configured to determine that the Update Location request received by the receiver 91 includes an indication that the UE does not support a GWCN/MOCN, an indication that the UE does not execute joint registration, and an indication that the UE does not execute joint location update.

When the processor 92 determines that the Update Location request received by the receiver 91 includes the indication that the UE does not support a GWCN/MOCN, the indication that the UE does not execute joint registration, and the indication that the UE does not execute joint location update, the processor 92 determines whether the operator identity of the first domain is the same as the operator identity of the second domain.

Further, the operator identity of the CS domain includes: a PLMN ID, an MSC address MSC Address, or a VLR number VLR Number.

The operator identity of the PS domain includes: a PLMN ID, an SGSN address SGSN Address, or an SGSN number SGSN Number.

The home location registrar in this embodiment of the present invention includes but is not limited to an HLR or an HSS.

By using the home location registrar provided by this embodiment of the present invention, it can be determined whether an operator identity of a first domain is the same as an operator identity of a second domain when location update is requested in the first domain. When a determining result indicates that the operator identity of the first domain is different from the operator identity of the second domain, the location update of the first domain is rejected, so that the first domain re-obtains an operator identity during next location update, thereby avoiding selecting different operators for the first domain and the second domain, and charging is performed, by one operator, for a first domain service and a second domain service of a user according to a unified charging standard.

With reference to the method embodiment shown in FIG. 4, a comparative example of the present invention provides a home location registrar. As shown in FIG. 10, the home location registrar includes: a receiver 1001, a transmitter 1002, and a processor 1003.

The receiver 1001 is configured to receive an Update Location request, where the Update Location request includes an operator identity of a first domain of a UE.

The transmitter 1002 is configured to send an Update Location response used for accepting the Update Location request.

The processor 1003 is configured to determine whether the operator identity, which is received by the receiver 1001, of the first domain is the same as an operator identity of a second domain of the UE.

The transmitter 1002 is further configured to send a Cancel Location request to the second domain according to a determining result of the processor 1003.

The first domain is a circuit switched CS domain and the second domain is a packet switched PS domain, or the second domain is a CS domain and the first domain is a PS domain.

The transmitter 1002 is configured to: when the processor 1003 determines that the operator identity, which is received by the receiver 1001, of the first domain is different from the operator identity of the second domain, send the Cancel Location request to the second domain.

The Cancel Location request sent by the transmitter 1002 includes the operator identity of the first domain.

Further, the processor 1003 is further configured to determine that the Update Location request does not include an indication that the UE does not support a GWCN/MOCN, an indication that the UE does not execute joint registration, or an indication that the UE does not execute joint location update. When the processor 1003 determines that the Update Location request does not include the indication that the UE does not support a GWCN/MOCN, the indication that the UE does not execute joint registration, or the indication that the UE does not execute joint location update, the processor 1003 determines whether the operator identity, received by the receiver 1001, of the first domain is the same as the operator identity of the second domain.

Further, the operator identity, which is received by the receiver 1001, of the CS domain includes: a PLMN ID, an MSC address MSC Address, or a VLR number VLR Number.

The operator identity of the PS domain includes: a PLMN ID, an SGSN address SGSN Address, or an SGSN number SGSN Number.

The home location registrar in this comparative example of the present invention includes but is not limited to an HLR or an HSS.

By using the home location registrar provided by this comparative example of the present invention, it can be determined whether an operator identity of a first domain is the same as an operator identity of a second domain when location update is requested in the first domain. When a determining result indicates that the operator identity of the first domain is different from the operator identity of the second domain, the location update of the second domain is canceled, so that the second domain re-obtains an operator identity during next location update, thereby avoiding selecting different operators for the first domain and the second domain, and charging is performed, by one operator, for a first domain service and a second domain service of a user according to a unified charging standard.

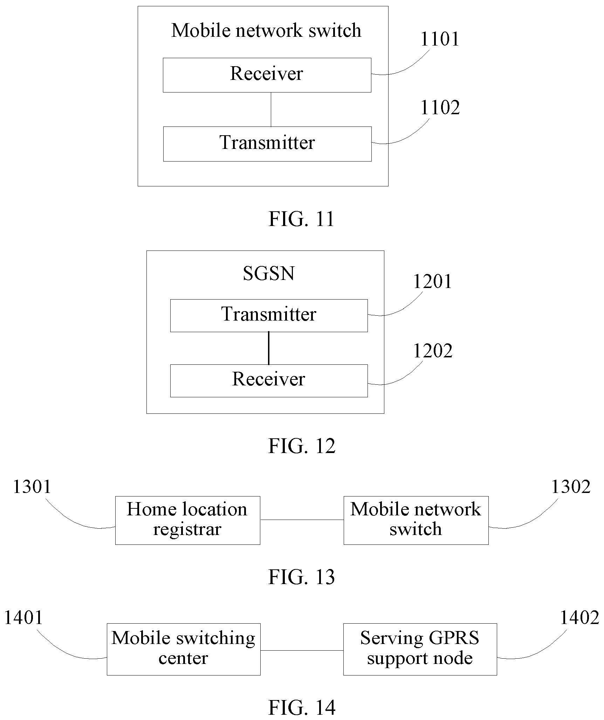

With reference to the method embodiment shown in FIG. 5, an embodiment of the present invention provides a mobile network switch. As shown in FIG. 11, the mobile network switch includes: a receiver 1101 and a transmitter 1102.

The receiver 1101 is configured to receive a Registration Request or a Location Update request.

The transmitter 1102 is configured to send an Update Location request to a home location registrar, where the Update Location request includes an operator identity of a first domain and at least one of the following: an indication that a UE does not support a GWCN/MOCN, an indication that the UE does not execute joint registration, and an indication that the UE does not execute joint update, so that the home location registrar determines whether the operator identity of the first domain is the same as an operator identity of a second domain according to the at least one indication sent by the transmitter 1102.

The first domain is a circuit switched CS domain and the second domain is a packet switched PS domain, or the second domain is a CS domain and the first domain is a PS domain.

Further, the operator identity, which is sent by the transmitter 1102, of the CS domain includes: a PLMN ID, an MSC address MSC Address, or a VLR number VLR Number.

The operator identity of the PS domain includes: a PLMN ID, an SGSN address SGSN Address, or an SGSN number SGSN Number.

The mobile network switch in this embodiment of the present invention includes but is not limited to an MSC and an SGSN.

By using the mobile network switch provided by this embodiment of the present invention, when at least one of the following cases occurs: a UE supports a GWCN/MOCN, joint registration is executed, and joint update is executed, a home location registrar is notified of the at least one case, so that the home location registrar does not determine whether an operator identity of a first domain is the same as an operator identity of a second domain, which can save a signaling overhead.

With reference to the method embodiment shown in FIG. 6, an embodiment of the present invention provides an SGSN. As shown in FIG. 12, the SGSN includes: a transmitter 1201 and a receiver 1202.

The transmitter 1201 is configured to send a Location Update request to an MSC in a joint registration or joint location update process.

The receiver 1202 is configured to receive a location update accept message sent by the MSC.

The transmitter 1201 is further configured to send an Update Location request to a home location registrar after the receiver 1202 receives the location update accept message.

The transmitter 1201 is further configured to send, before sending the Location Update request to the MSC, an Update Location request to the home location registrar, where the Update Location request includes an operator identity of a packet switched PS domain.

Further, the receiver 1202 is further configured to receive an Update Location response message that is sent by the home location registrar and used for indicating rejecting the Update Location request.

Further, the operator identity, which is sent by the transmitter 1201, of the PS domain includes:
a PLMN ID, an SGSN address SGSN Address, or an SGSN number SGSN Number.

By using the SGSN provided by this embodiment of the present invention, in a joint registration (joint location update) process, location update of a CS domain can be first initiated; and after the location update of the CS domain is successful, a Location Update request of a PS domain is initiated. Compared with the prior art in which location update of a PS domain is first initiated in joint registration (joint location update), this can avoid a location update failure of a CS domain due to location update of a PS domain.

With reference to the foregoing apparatus embodiments, an embodiment of the present invention further provides a location update system. As shown in FIG. 13, the system includes a home location registrar 1301 and a mobile network switch 1302. The home location registrar 1301 may be the home location registrar shown in FIG. 9 or FIG. 10, and the mobile network switch 1302 may be the mobile network switch shown in FIG. 11. A data exchange function is available between the home location registrar 1301 and the mobile network switch 1302.

By using the location update system provided by this embodiment of the present invention, a mobile network switch can report an operator identity of a CS domain and an operator identity of a PS domain to a home location registrar. The home location registrar determines whether the operator identity of the CS domain is the same as the operator identity of the PS domain. When a determining result indicates that the operator identity of the CS domain is different from the operator identity of the PS domain, the home location registrar rejects (cancels) registration (location update) of the CS domain and/or the PS domain. An SGSN re-performs registration (location update) on the PS domain, and reports a new operator identity of the PS domain to the home location registrar in a process of re-performing registration or update, thereby avoiding selecting a same operator for the CS domain and the PS domain, and charging is performed, by one operator, for a CS domain service and a PS domain service of a user according to a unified charging standard.

With reference to the foregoing apparatus embodiments, an embodiment of the present invention further provides a location update system. As shown in FIG. 14, the system includes a mobile switching center MSC 1401 and a serving GPRS support node SGSN 1402. The MSC 1401 may be the mobile network switch shown in FIG. 11. The SGSN 1402 may be the mobile network switch shown in FIG. 11 or the SGSN shown in FIG. 12. A data exchange function is available between the MSC 1401 and the SGSN 1402.

By using the location update system provided by this embodiment of the present invention, a mobile network switch can report an operator identity of a CS domain and an operator identity of a PS domain to a home location registrar. The home location registrar determines whether the operator identity of the CS domain is the same as the operator identity of the PS domain. When a determining result indicates that the operator identity of the CS domain is different from the operator identity of the PS domain, the home location registrar rejects (cancels) registration (location update) of the CS domain and/or the PS domain. An SGSN re-performs registration (location update) on the PS domain, and reports a new operator identity of the PS domain to the home location registrar in a process of re-performing registration or update, thereby avoiding selecting a same operator for the CS domain and the PS domain, and charging is performed, by one operator, for a CS domain service and a PS domain service of a user according to a unified charging standard.

It may be clearly understood by a person skilled in the art that, for the purpose of convenient and brief description, division of the foregoing function modules is taken as an example for illustration. In actual application, the foregoing functions can be allocated to different modules and implemented according to a requirement, that is, an inner structure of an apparatus is divided into different function modules to implement all or part of the functions described above. For a detailed working process of the foregoing system, apparatus, and unit, reference may be made to a corresponding process in the foregoing method embodiments, and details are not described herein again.

In the several embodiments and comparative examples provided in the present application, it should be understood that the disclosed system, apparatus, and method may be implemented in other manners. For example, the described apparatus embodiment is merely exemplary. For example, the module or unit division is merely logical function division and may be other division in an actual implementation. For example, a plurality of units or components may be combined or integrated into another system, or some features may be ignored or not performed. Furthermore, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to an actual need to achieve the objectives of the solutions of the embodiments.

In addition, functional units in the embodiments and comparative examples of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The software product is stored in a storage medium and includes several instructions for instructing a computer device (which may be a personal computer, a server, or a network device) or a processor to perform all or a part of the steps of the methods described in the embodiments of the present invention. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc.

## Claims

1. A location update method, comprising:
receiving (301), by a home location registrar, an Update Location request from a mobile network switch, wherein the Update Location request comprises an operator identity of a first domain of a user equipment UE;
determining (302), by the home location registrar, whether the operator identity of the first domain is the same as an operator identity of a second domain of the UE; and
sending (303), by the home location registrar according to a determining result, an Update Location response used for accepting the Update Location request when the determining result indicates that the operator identity of the first domain is the same as the operator identity of the second domain of the UE, or rejecting the Update Location request when the determining result indicates that the operator identity of the first domain is different from the operator identity of the second domain of the UE, wherein
the first domain is a circuit switched CS domain and the second domain is a packet switched PS domain, or the second domain is a CS domain and the first domain is a PS domain;
**characterized by**:
the determining (302), by the home location registrar, whether the operator identity of the first domain is the same as an operator identity of a second domain of the UE is performed when the home location registrar determines that the Update Location request comprises at least one of the following: an indication that the UE does not support one of a gateway core network GWCN or a multi-operator core network MOCN, an indication that the UE does not execute joint registration, and an indication that the UE does not execute joint location update.

2. The method according to claim 1, wherein the Update Location response used for rejecting the Update Location request comprises the operator identity of the second domain.

3. The method according to any one of claims 1 or 2, wherein:
the operator identity of the CS domain comprises at least one of the following: a public land mobile network identity PLMN ID, a mobile switching center address MSC Address, and a visitor location register number VLR Number;
the operator identity of the PS domain comprises at least one of the following: a public land mobile network identity PLMN ID, a serving general packet radio service GPRS support node address SGSN Address, and an SGSN number SGSN Number.

4. The method of claim 1, wherein before the receiving, by the home location registrar, the Update Location request, the method comprises::
receiving (501), by a mobile network switch, a Registration Request or a Location Update request; and
sending (502), by the mobile network switch, the Update Location request to the home location registrar according to the Registration Request or the Location Update request received by the receiver.

5. A home location registrar, comprising:
a receiver (91), configured to receive an Update Location request, wherein the Update Location request comprises an operator identity of a first domain of a user equipment UE;
a processor (92), configured to determine whether the operator identity, which is received by the receiver, of the first domain is the same as an operator identity of a second domain of the UE; wherein:
the first domain is a circuit switched CS domain and the second domain is a packet switched PS domain, or the second domain is a CS domain and the first domain is a PS domain,
**characterized in that** the home location registrar further comprises:
a transmitter (93), configured to send, according to a determining result of the processor, an Update Location response used for accepting the Update Location request when the determining result indicates that the operator identity of the first domain is the same as the operator identity of the second domain of the UE, or rejecting the Update Location request when the determining result indicates that the operator identity of the first domain is different from the operator identity of the second domain of the UE is performed when it is determined that the Update Location request comprises at least one of the following: an indication that the UE does not support one of a gateway core network GWCN or a multi-operator core network MOCN, an indication that the UE does not execute joint registration, and an indication that the UE does not execute joint location update.

6. A system comprising:
the home location registrar of claim 5; and
a mobile network switch;
wherein the mobile network switch comprises:
a receiver (1101), configured to receive a Registration Request or a Location Update request; and
a transmitter (1102), configured to send the Update Location request to the home location registrar according to the Registration Request or the Location Update request received by the receiver.

## Patentansprüche

1. Ortsaktualisierungsverfahren, umfassend:
Erhalten (301) durch eine Heimatortsregistrierungsstelle einer Aktualisierungsortanfrage von einem mobilen Netzwerkschalter, wobei die Aktualisierungsortanfrage eine Betreiberidentität einer ersten Domäne eines Benutzergeräts UE umfasst;
Bestimmen (302) durch die Heimatortsregistrierungsstelle, ob die Betreiberidentität der ersten Domäne dieselbe wie eine Betreiberidentität einer zweiten Domäne des UE ist; und
Senden (303) durch die Heimatortsregistrierungsstelle gemäß einem Bestimmungsergebnis einer Aktualisierungsortantwort, die zum Akzeptieren der Aktualisierungsortanfrage verwendet wird, wenn das Bestimmungsergebnis angibt, dass die Betreiberidentität der ersten Domäne dieselbe wie die Betreiberidentität der zweiten Domäne des UE ist, oder Abweisen der Aktualisierungsortanfrage, wenn das Bestimmungsergebnis angibt, dass sich die Betreiberidentität der ersten Domäne von der Betreiberidentität der zweiten Domäne des UE unterscheidet, wobei die erste Domäne eine leitungsvermittelte CS-Domäne ist und die zweite Domäne eine paketvermittelte PS-Domäne ist, oder die zweite Domäne eine CS-Domäne ist und die erste Domäne eine PS-Domäne ist;
**dadurch gekennzeichnet, dass**:
das Bestimmen (302) durch die Heimatortsregistrierungsstelle, ob die Betreiberidentität der ersten Domäne dieselbe wie eine Betreiberidentität einer zweiten Domäne des UE ist, durchgeführt wird, wenn die Heimatortsregistrierungsstelle bestimmt, dass die Aktualisierungsortanfrage mindestens eine der folgenden umfasst: eine Angabe dahingehend, dass das UE keines eines Gateway-Kernnetzwerks GWCN oder eines Mehrbetreiber-Kernnetzwerks MOCN unterstützt, eine Angabe dahingehend, dass das UE keine gemeinsame Registrierung ausführt, und eine Angabe dahingehend, dass das UE keine gemeinsame Ortsaktualisierung ausführt.

2. Verfahren nach Anspruch 1, wobei die Aktualisierungsortantwort, die verwendet wird, um die Aktualisierungsortanfrage abzuweisen, die Betreiberidentität der zweiten Domäne umfasst.

3. Verfahren nach einem der Ansprüche 1 oder 2, wobei:
die Betreiberidentität der CS-Domäne mindestens eine der folgenden umfasst: eine öffentliche terrestrische Mobilnetzwerkidentität (PLMN-ID), eine Mobilvermittlungsstellenadresse (MSC-Adresse) und eine Besucherortsregisternummer (VLR-Nummer);
die Betreiberidentität der PS-Domäne mindestens eine der folgenden umfasst: eine öffentliche terrestrische Mobilnetzwerkidentität (PLMN-ID), eine versorgende Allgemeinpaketfunkdienst(GPRS)-Unterstützungsknotenadresse (SGSN-Adresse) und eine SGSN-Nummer.

4. Verfahren nach Anspruch 1, wobei vor dem Erhalten durch die Heimatortsregistrierungsstelle der Aktualisierungsortanfrage das Verfahren Folgendes umfasst:
Erhalten (501) durch einen mobilen Netzwerkschalter einer Registrierungsanfrage oder einer Ortsaktualisierungsanfrage; und
Senden (502) durch den mobilen Netzwerkschalter der Aktualisierungsortanfrage zu der Heimatortsregistrierungsstelle gemäß der Registrierungsanfrage oder der Ortsaktualisierungsanfrage, die von dem Empfänger erhalten wird.

5. Heimatortsregistrierungsstelle, die Folgendes aufweist:
einen Empfänger (91), der konfiguriert ist, um eine Aktualisierungsortanfrage zu erhalten, wobei die Aktualisierungsortanfrage eine Betreiberidentität einer ersten Domäne eines Benutzergeräts UE umfasst;
einen Prozessor (92), der konfiguriert ist, um zu bestimmen, ob die Betreiberidentität, welche von dem Empfänger erhalten wird, der ersten Domäne dieselbe wie eine Betreiberidentität einer zweiten Domäne des UE ist; wobei:
die erste Domäne eine leitungsvermittelte CS-Domäne ist und die zweite Domäne eine paketvermittelte PS-Domäne ist oder die zweite Domäne eine CS-Domäne ist und die erste Domäne eine PS-Domäne ist,
**dadurch gekennzeichnet, dass** die Heimatortsregistrierungsstelle ferner Folgendes aufweist:
einen Sender (93), der konfiguriert ist, um gemäß einem Bestimmungsergebnis des Prozessors eine Aktualisierungsortantwort zu senden, die verwendet wird, um die Aktualisierungsortanfrage zu akzeptieren, wenn das Bestimmungsergebnis angibt, dass die Betreiberidentität der ersten Domäne dieselbe wie die Betreiberidentität der zweiten Domäne des UE ist, oder die Aktualisierungsortanfrage abzuweisen, wenn das Bestimmungsergebnis angibt, dass sich die Betreiberidentität der ersten Domäne von der Betreiberidentität der zweiten Domäne des UE unterscheidet, durchgeführt wird, wenn bestimmt wird, dass die Aktualisierungsortanfrage mindestens eine der folgenden umfasst: eine Angabe dahingehend, dass das UE keines eines Gateway-Kernnetzwerks GWCN oder eines Mehrbetreiber-Kernnetzwerks MOCN unterstützt, eine Angabe dahingehend, dass das UE keine gemeinsame Registrierung ausführt, und eine Angabe dahingehend, dass das UE keine gemeinsame Ortsaktualisierung ausführt.

6. System, das Folgendes aufweist:
die Heimatortsregistrierungsstelle nach Anspruch 5; und
einen mobilen Netzwerkschalter;
wobei der mobile Netzwerkschalter Folgendes aufweist:
einen Empfänger (1101), der konfiguriert ist, um eine Registrierungsanfrage oder eine Ortsaktualisierungsanfrage zu erhalten; und
einen Sender (1102), der konfiguriert ist, um die Aktualisierungsortanfrage zu der Heimatortsregistrierungsstelle gemäß der Registrierungsanfrage oder der Ortsaktualisierungsanfrage, die von dem Empfänger erhalten wird, zu senden.

## Revendications

1. Procédé de mise à jour de localisation, consistant à :
recevoir (301), par une unité d'enregistrement de localisation domestique, une demande de mise à jour de localisation en provenance d'un commutateur de réseau mobile, la demande de mise à jour de localisation comprenant un identifiant d'opérateur d'un premier domaine d'un équipement d'utilisateur (UE) ;
déterminer (302), par l'unité d'enregistrement de localisation domestique, si l'identifiant d'opérateur du premier domaine est identique ou non à un identifiant d'opérateur d'un second domaine de l'UE ; et
envoyer (303), par l'unité d'enregistrement de localisation domestique, selon un résultat de la détermination, une réponse de mise à jour de localisation utilisée pour accepter la demande de mise à jour de localisation quand le résultat de la détermination indique que l'identifiant d'opérateur du premier domaine est identique à l'identifiant d'opérateur du second domaine de l'UE, ou pour rejeter la demande de mise à jour de localisation quand le résultat de la détermination indique que l'identifiant d'opérateur du premier domaine est différent de l'identifiant d'opérateur du second domaine de l'UE,
le premier domaine étant un domaine à commutation de circuits (CS) et le second domaine étant un domaine à commutation de paquets (PS), ou le second domaine étant un domaine CS et le premier domaine étant un domaine PS ;
le procédé étant **caractérisé en ce que** :
l'étape consistant à déterminer (302), par l'unité d'enregistrement de localisation domestique, si l'identifiant d'opérateur du premier domaine est identique ou non à un identifiant d'opérateur d'un second domaine de l'UE est réalisée quand l'unité d'enregistrement de localisation domestique détermine que la demande de mise à jour de localisation comprend au moins une des indications suivantes : une indication indiquant que l'UE ne prend pas en charge un réseau central de passerelle (GWCN) ou un réseau central multi-opérateur (MOCN), une indication indiquant que l'UE n'exécute pas d'enregistrement conjoint, et une indication indiquant que l'UE n'exécute pas de mise à jour de localisation conjointe.

2. Procédé selon la revendication 1, dans lequel la réponse de mise à jour de localisation utilisée pour rejeter la demande de mise à jour de localisation comprend l'identifiant d'opérateur du second domaine.

3. Procédé selon l'une quelconque des revendications 1 et 2, dans lequel :
l'identifiant d'opérateur du domaine CS comprend au moins un des éléments suivants :
un identifiant de réseau mobile terrestre public (PLMN ID), une adresse de centre de communication mobile (MSC) et un numéro d'enregistrement de localisation de visiteur (VLR) ;
l'identifiant d'opérateur du domaine PS comprend au moins un des éléments suivants : un identifiant de réseau mobile terrestre public (PLMN ID), une adresse de noeud de support de service général de radiocommunication par paquets (GPRS) de desserte (adresse SGSN) et un numéro SGSN (numéro SGSN).

4. Procédé selon la revendication 1, le procédé consistant en outre, avant la réception, par l'unité d'enregistrement de localisation domestique, de la demande de mise à jour de localisation, à :
recevoir (501), par un commutateur de réseau mobile, une demande d'enregistrement ou une demande de mise à jour de localisation ; et
envoyer (502), par le commutateur de réseau mobile, la demande de mise à jour de localisation à l'unité d'enregistrement de localisation domestique selon la demande d'enregistrement ou la demande de mise à jour de localisation reçue par le récepteur.

5. Unité d'enregistrement de localisation domestique, comprenant :
un récepteur (91), conçu pour recevoir une demande de mise à jour de localisation, la demande de mise à jour de localisation comprenant un identifiant d'opérateur d'un premier domaine d'un équipement d'utilisateur (UE) ;
un processeur (92), conçu pour déterminer si l'identifiant d'opérateur du premier domaine, qui est reçu par le récepteur, est identique ou non à un identifiant d'opérateur d'un second domaine de l'UE,
le premier domaine étant un domaine à commutation de circuits (CS) et le second domaine étant un domaine à commutation de paquets (PS), ou le second domaine étant un domaine CS et le premier domaine étant un domaine PS,
l'unité d'enregistrement de localisation domestique étant **caractérisée en ce qu'**elle comprend en outre :
un émetteur (93), conçu pour envoyer, selon un résultat de la détermination du processeur, une réponse de mise à jour de localisation utilisée pour accepter la demande de mise à jour de localisation quand le résultat de la détermination indique que l'identifiant d'opérateur du premier domaine est identique à l'identifiant d'opérateur du second domaine de l'UE, ou pour rejeter la demande de mise à jour de localisation quand le résultat de la détermination indique que l'identifiant d'opérateur du premier domaine est différent de l'identifiant d'opérateur du second domaine de l'UE est réalisé quand il est déterminé que la demande de mise à jour de localisation comprend au moins une des indications suivantes : une indication indiquant que l'UE ne prend pas en charge un réseau central de passerelle (GWCN) ou un réseau central multi-opérateur (MOCN), une indication indiquant que l'UE n'exécute pas d'enregistrement conjoint, et une indication indiquant que l'UE n'exécute pas de mise à jour de localisation conjointe.

6. Système comprenant :
l'unité d'enregistrement de localisation domestique selon la revendication 5 ; et
un commutateur de réseau mobile ;
le commutateur de réseau mobile comprenant :
un récepteur (1101), conçu pour recevoir une demande d'enregistrement ou une demande de mise à jour de localisation ; et un émetteur (1102), conçu pour envoyer la demande de mise à jour de localisation à l'unité d'enregistrement de localisation domestique selon la demande d'enregistrement ou la demande de mise à jour de localisation reçue par le récepteur.
